# EUROPEAN PATENT SPECIFICATION

(11) **EP 0 756 683 B1**
(45) Date of publication and mention of the grant of the patent: **02.09.1998**
(21) Application number: 94917849.5
(22) Date of filing: 22.04.1994
(51) Int. Cl.: F16L 33/22, F16L 47/00

(54) **PIPE COUPLING FOR PLASTIC TUBES**
KUPPLUNG FÜR ROHRE AUS KUNSTSTOFF
RACCORD POUR TUYAUX EN MATIERE PLASTIQUE

(43) Date of publication of application: 05.02.1997
(73) Proprietor: WIRSBO BRUKS AKTIEBOLAG, S-730 61 Virsbo (SE)
(72) Inventor: MOLLSJÖ, Bo, S-510 54 Brämhult (SE)
(74) Representative: Ström, Tore
(86) International application number: SE9400356
(87) International publication number: WO9529360

(56) References cited:
- DE-C- 3 608 843
- US-A- 3 023 033

## Description

The invention relates to a coupling for plastic pipes, i.e. pipes which are sufficiently soft to be widened and bent but cannot be bent as easily as the products which are commonly identified as hose. They can, however, be mounted in pipe channels and along walls rather straight without sagging or bulging. More particularly the pipe coupling is provided for such pipes as are used as water pipes for hot or cold water and accordingly are under a certain internal overpressure (of the order of 1 Mpa) and may be exposed to temperatures up to 95°C. Another possible use of such pipes is as line pipes in central hot water heating systems and as heating pipes to be located in floors. Pipes of the type referred to herein at present are made of crosslinked polyethylene but also other materials are of course possible.

The coupling of the invention is of the type disclosed in DE-C2-36 08 843 and comprises a nipple to be pushed into the plastic pipe and having outside annular ridges, and clamping means consisting of a lock ring which can be pushed axially over the plastic pipe on the nipple to compress the material of the plastic pipe, said pipe being pressed between the annular ridges of the nippel and the lock ring.

In prior art couplings of the type referred to the nipple and the lock ring are made of metal. The pipe is mounted and fixed longitudinally at room temperature and then, when the pipe is exposed to an operating temperature higher than that at which the coupling was mounted, due to a fluid at increased temperature being passed through the pipe, thermal linear expansion will take place. Since the metal has a lower coefficient of linear heat expansion than the plastic of the pipe, and the lock ring moreover due to the heat dissipation to the surroundings is at a lower temperature than the nipple (e.g. 60°C at the outside of the lock ring at 95°C of the fluid) the pipe wall as a consequence thereof will be exposed to a radial pressure force and thus to increasing compression at the temperature rise, the pipe wall being thinned. After a certain period the material will creep and thus the pressure force will decrease. If the temperature later on is decreased momentarily the pipe and the coupling will be exposed to a tensile force due to the thermal linear expansion. As a consequence there is a risk that the function of the coupling will be jeopardized after a certain operating period.

The purpose of the invention is to provide a pipe coupling of the kind referred to wherein the risk of the pipe wall being thinner at creeping of the material thereof will not arise after a certain operating period so that the pipe coupling thus is also safer than prior art couplings.

For said purpose the pipe coupling according to the invention has obtained the characterising features of claim 1.

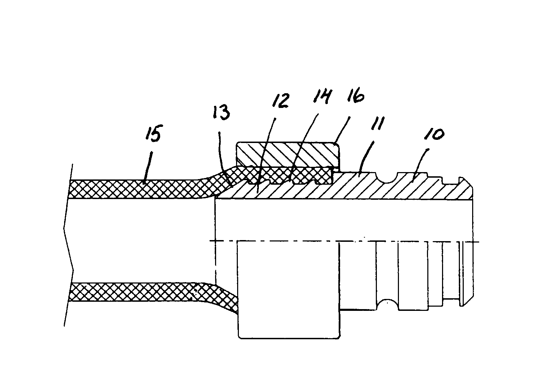

In order to explain the invention in more detail an illustrative embodiment will be described below reference being made to the accompanying drawing which shows a view partly in axial cross-section and partly in side view of a pipe coupling of the kind referred to.

The pipe coupling can be made as a bow, an angle fitting, a T-fitting, a distributor or any other fitting used in conenction with piping in e.g. tap water or heating systems. The pipe coupling as shown herein comprises a pipe body 10 forming an annular flange 11 and a nipple 12 terminating at the free end thereof at a conical end portion 13 formed by outside bevelling. On the nipple there are provided a number of annular ridges 14 which have sawtooth shape with the sloping surface facing the free end of the nipple and terminating at a cylindrical surface.

In order to mount a plastic pipe 15 on the pipe coupling said pipe is pushed onto the nipple from the conical end 13 thereof, clamping means consisting of an external lock ring 16 then being pushed axially over the nipple to compress the material of the plastic tube between the lock ring and the nipple.

The pipe coupling according to the invention can be made of metal but preferably is made of plastic. According to the invention it is essential that the coefficient of linear heat expansion of the material of the lock ring is greater than that of the material of the nipple and preferably greater than or equal to the coefficient of linear heat expansion of the material of the pipe. In a preferred embodiment of the coupling according to the invention for use together with polyethylene or polybutylene pipes, particularly pipes of crosslinked polyethyelene, body 10 forming nipple 12 preferably is made of polyethersulphone, polysulphone or polyaryletherketone, or mixtures thereof, lock ring 16 preferably consisting of polyamide. Other plastic materials or also metals e.g. brass or aluminium can be used for the nipple and the lock ring provided the condition mentioned above regarding the coefficient of linear heat expansion is satisfied.

In a specific preferred embodiment of the coupling to be used for pipes of crosslinked polyethylene having the coefficient of linear heat expansion 1.4 x 10⁻⁴ m/m°C element 10 forming nipple 12 consists of polysulphone which has the coefficient of linear heat expansion 0.56 x 10⁻⁴ m/m°C, and the lock ring 16 consists of polyamide which has the coefficient of linear heat expansion 0.7 x 10⁻⁴ m/m°C. The coefficient of linear heat expansion of the lock ring should be 30 to 400 % greater than the coefficient of linear heat expansion of the nipple and 0 to 90 % greater than the coeffecient of linear heat expansion of the pipe. Where the coefficient of linear heat expansion should be located in the ranges mentioned above can be calculated by the average skilled man having knowledge of the invention on the basis of the coefficients of linear heat expansion of the materials chosen for the pipe and the nipple. By the coefficient of linear heat expansion thus being greater for the material of the lock ring than for the material of the nipple the disadvantage referred to above will be avoided, viz. that the pipe wall will be compressed at temperature rise and that the material will creep causing untightness of the coupling. On the contrary the thermal movements of the pipe and the different parts of the coupling will be equal at temperature rise. Thus, the coupling is always tight and can take up axial forces also at lower temperatures due to pressure shocks in the system. At higher temperatures the pipe will expand longitudinally and reduce the tensile forces acting on the coupling.

## Claims

1. Coupling for plastic pipes (15) comprising a nipple (12) to be pushed into the plastic pipe and having outside annular ridges (14), and clamping means consisting of a lock ring (16) which can be pushed axially over the plastic pipe on the nipple to compress the material of the plastic pipe, said pipe being pressed between the annular ridges of the nippel and the lock ring, **characterized** in that the coefficient of linear heat expansion of the material of the lock ring (16) is greater than that of the material of the nipple (12).

2. Pipe coupling according to claim 1, **characterized** in that the coefficient of linear heat expansion of the material of the lock ring (16) is 30-400 % greater than that of the material of the nipple (12).

3. Pipe coupling according to claim 1 or 2, **characterized** in that the coefficient of linear heat expansion of the material of the lock ring (16) is greater than or equal to the coefficient of linear heat expansion of the material of the pipe (15).

4. Pipe coupling according to claim 3, **characterized** in that the coefficient of linear heat expansion of the lock ring (16) is 0 to 90 % greater than the coefficient of linear heat expansion of the material of the pipe (15).

5. Pipe coupling according to any of claims 1 to 4 **characterized** in that the nipple (12) and the lock ring (16) are made of plastic.

6. Pipe coupling according to claim 5 **characterized** in that the nipple (12) for use with polyethylene or polybutylene pipes (15), particularly pipes of crosslinked polyethylene, consists of polyethersulphone, polysulphone or polyaryletherketone, or mixtures thereof.

7. Pipe coupling according to claim 6 **characterized** in that the lock ring (16) consists of polyamide.

## Patentansprüche

1. Kupplung für Kunststoffrohre (15) mit:
einem Nippel (12), der in das Kunststoffrohr gedrückt wird und äußere ringförmige Rippen (14) besitzt, und
einem Klemmittel, das aus einem Klemmring (16) besteht, der axial über das Kunststoffrohr auf dem Nippel geschoben werden kann, um das Material des Kunststoffrohrs zusammenzudrücken, wobei das Rohr zwischen den ringförmigen Rippen des Nippels und dem Klemmring zusammengedrückt wird,
dadurch gekennzeichnet, daß der lineare Wärmeausdehnungskoeffizient des Materials des Klemmrings (16) größer als der des Materials des Nippels (12) ist.

2. Rohrkupplung nach Anspruch 1, dadurch gekennzeichnet, daß der lineare Wärmeausdehnungskoeffizient des Materials des Klemmrings (16) 30 bis 400 % größer als der des Materials des Nippels (12) ist.

3. Rohrkupplung nach Anspruch 1 oder 2, dadurch gekennzeichnet, daß der lineare Wärmeausdehnungskoeffizient des Materials des Klemmrings (16) größer als der lineare Wärmeausdehnungskoeffizient des Materials des Rohrs (15) ist.

4. Rohrkupplung nach Anspruch 3, dadurch gekennzeichnet, daß der lineare Wärmeausdehnungskoeffizient des Klemmrings (16) 0 bis 90 % größer als der lineare Wärmeausdehnungskoeffizient des Materials des Rohrs (15) ist.

5. Rohrkupplung nach einer der Ansprüche 1 bis 4, dadurch gekennzeichnet, daß der Nippel (12) und der Klemmring (16) aus Kunststoff gefertigt sind.

6. Rohrkupplung nach Anspruch 5, dadurch gekennzeichnet, daß der Nippel (12) zur Verwendung mit Polyethylen- oder Polybutylenrohren (15), insbesondere mit Rohren aus vernetztem Polyethylen, aus Polyethersulfon, Polysulfon oder Polyaryletherketon, oder Mischungen daraus besteht.

7. Rohrkupplung nach Anspruch 6, dadurch gekennzeichnet, daß der Klemmring (16) aus Polyamid besteht.

## Revendications

1. Raccord pour tuyaux (15) en matière plastique, comprenant un manchon (12) devant être enfoncé dans le tuyau en matière plastique et ayant des nervures annulaires (14) extérieures, et un moyen de serrage consistant en une bague de verrouillage (16) qui peut être poussée axialement sur le tuyau en matière plastique, sur le manchon, afin de compresser le matériau du tuyau en matière plastique, ledit tuyau étant pressé entre les nervures annulaires du manchon et la bague de verrouillage, caractérisé en ce que le coefficient de dilatation thermique linéaire du matériau de la bague de verrouillage (16) est supérieur à celui du matériau du manchon (12).

2. Raccord pour tuyaux selon la revendication 1, caractérisé en ce que le coefficient de dilatation thermique linéaire du matériau de la bague de verrouillage (16) est de 30 à 400 % supérieur à celui du matériau du manchon (12).

3. Raccord pour tuyaux selon la revendication 1 ou 2, caractérisé en ce que le coefficient de dilatation thermique linéaire du matériau de la bague de verrouillage (16) est supérieur ou égal au coefficient de dilatation thermique linéaire du matériau du tuyau (15).

4. Raccord pour tuyaux selon la revendication 3, caractérisé en ce que le coefficient de dilatation thermique linéaire de la bague de verrouillage (16) est de 0 à 90 % supérieur au coefficient de dilatation thermique linéaire du matériau de tuyau (15).

5. Raccord pour tuyaux selon l'une quelconque des revendications 1 à 4, caractérisé en ce que le manchon (12) et la bague de verrouillage (16) sont réalisés en matière plastique.

6. Raccord pour tuyaux selon la revendication 5, caractérisé en ce que le manchon (12) destiné à être utilisé avec des tuyaux (15) en polyéthylène ou polybutylène, en particulier des tuyaux en polyéthylène réticulé, consiste en du polyéthersulphone, polysulphone ou polyaryléthercétone ou leurs mélanges.

7. Raccord pour tuyaux selon la revendication 6, caractérisé en ce que la bague de verrouillage (16) consiste cn du polyamide.
